# EUROPEAN PATENT APPLICATION

(11) **EP 3 174 362 A1**
(43) Date of publication of application: **31.05.2017**
(21) Application number: 15824030.9
(22) Date of filing: 22.07.2015
(51) Int. Cl.: H04W 76/06, H04L 29/08, H04W 28/06, H04W 92/18

(54) **USER TERMINAL AND MOBILE COMMUNICATION SYSTEM**

(30) Priority: 25.07.2014 JP 2014152429; 08.08.2014 US 201462035088 P
(71) Applicant: Kyocera Corporation, Kyoto-shi, Kyoto 612-8501 (JP)
(72) Inventor: ADACHI, Hiroyuki, Kyoto-shi Kyoto 612-8501 (JP); MORITA, Kugo, Kyoto-shi Kyoto 612-8501 (JP); YAMAZAKI, Chiharu, Kyoto-shi Kyoto 612-8501 (JP)
(74) Representative: Schwabe - Sandmair - Marx
(86) International application number: PCT/JP2015/070873
(87) International publication number: WO 2016/013590

(57) **Abstract**

A user terminal according to an embodiment comprises: a controller configured to perform control to discard data of a predetermined sequence number, under a predetermined condition based on a window size used in a receiving RLC entity to define a sequence number of data capable of being received without advancing a window, in the receiving RLC entity established to receive data by D2D communication that is direct device-to-device communication. The controller sets the window size to zero.

## Description

### TECHNICAL FIELD

The present application relates to a user terminal that is used in a mobile communication system that supports D2D communication being direct device-to-device communication and a mobile communication system.

### BACKGROUND ART

In the 3rd Generation Partnership Project (3GPP) that is a mobile communication system standardization project, introduction of a device-to-device proximity service (D2D ProSe) in Release 12 as a new function is under review.

The D2D proximity service is a service that enables direct D2D communication to be performed in a synchronous cluster including a plurality of user terminals which are synchronized with one another. The D2D proximity service includes a D2D discovery procedure of discovering a nearby terminal and D2D communication that is direct D2D communication.

In the D2D communication, a transmitting user terminal establishes a transmitting RLC entity in order to transmit data, and a receiving user terminal establishes a receiving RLC entity in order to receive data. Currently, the receiving RLC entity has been agreed to be release depending on implementation of a user terminal, but there is no agreement on the release of the transmitting RLC entity (see Non Patent Document 1).

### PRIOR ART DOCUMENT

### NON-PATENT DOCUMENT

Non Patent Document 1: 3GPP Written Contribution RP-140648

### SUMMARY OF THE INVENTION

A user terminal according to an embodiment comprises a controller configured to perform control to discard data of a predetermined sequence number, under a predetermined condition based on a window size used in a receiving RLC entity to define a sequence number of data capable of being received without advancing a window, in the receiving RLC entity established to receive data by D2D communication that is direct device-to-device communication. The controller sets the window size to zero.

### BRIEF DESCRIPTION OF THE DRAWINGS

FIG. 1 is a configuration diagram illustrating an LTE system according to an embodiment;
FIG. 2 is a block diagram illustrating a UE according to an embodiment;
FIG. 3 is a block diagram illustrating an eNB according to an embodiment;
FIG. 4 is a protocol stack diagram according to an embodiment;
FIG. 5 is a configuration diagram illustrating a radio frame according to an embodiment;
FIG. 6 is a diagram for describing a PDCP entity and an RLC entity in D2D communication;
FIG. 7 is a diagram illustrating an example for describing an arrangement of time and frequency resources used in D2D communication according to an embodiment;
FIG. 8 is a diagram for describing an operation of a UE 100 in D2D communication; and
FIG. 9 is a diagram for describing an operation (a second operation) of a UE 100 in D2D communication.
Fig. 10 is a diagram indicating examples of out-of-coverage D2D communication and in-coverage D2D communication.
Fig. 11 is a diagram indicating example of in-activity timer related actions.

### DESCRIPTION OF THE EMBODIMENT

### [Overview of Embodiment]

In an existing cellular communication, establishment and release of a receiving entity and a transmitting entity between a user terminal and a base station are simultaneously performed by the base station and the user terminal, respectively, through an RRC message. Thus, although a sequence number value (hereinafter, referred to as an "SN value") of data is initialized each time an RLC entity is established, no deviation in an SN value of data occurs between a receiving entity and a transmitting RLC entity.

On the other hand, in the D2D communication, when the transmitting user terminal releases the transmitting RLC entity for performing transmission to the receiving user terminal and then transmits data to the receiving user terminal through a newly established transmitting RLC entity, the receiving user terminal may maintain the receiving RLC entity used to receive data from the transmitting user terminal without releasing the receiving RLC entity.

In this case, when the SN value of data is initialized in the new transmitting RLC entity as in the existing cellular communication, deviation in an SN value is likely to occur between the receiving user terminal that is maintaining the receiving RLC entity and the transmitting user terminal that has established the new transmitting RLC entity.

Since the receiving user terminal determines whether or not new data is identical to previously received data based on the SN value of data received from the transmitting user terminal, when deviation occurs in the SN value, the receiving user terminal is likely to regard new data as previously received data and discard the new data.

In this regard, one of objects of the present application is to provide a technique in which it is possible to prevent the user terminal from regarding new data as previously received data and discarding the new data.

A user terminal (a receiving user terminal) according to an embodiment comprises: a controller configured to perform control to discard data of a predetermined sequence number, under a predetermined condition based on a window size used in a receiving RLC entity to define a sequence number of data capable of being received without advancing a window, in the receiving RLC entity established to receive data by D2D communication that is direct device-to-device communication. The controller sets the window size to zero.

In the embodiment, the controller sets, in accordance with a type of information transmitted by the D2D communication, the window size to zero.

In the embodiment, the controller sets, in accordance with a destination of data transmitted by the D2D communication, the window size to zero.

In the embodiment, the controller sets, in accordance with a transmission method in the D2D communication, the window size to zero.

A user terminal according to an embodiment comprises a controller configured to establish a receiving RLC entity for receiving data by D2D communication that is direct device-to-device communication. The controller performs, in accordance with a type of information transmitted by the D2D communication, a setting related to a window in the receiving RLC entity.

A user terminal (a receiving user terminal) according to an embodiment comprises a receiver configured to receive information related to release of a transmitting RLC entity from another user terminal that has established the transmitting RLC entity for transmitting data to the user terminal through D2D communication that is direct device-to-device communication.

In the embodiment, the user terminal further comprises a controller configured to release a receiving RLC entity for receiving data from the another user terminal through the D2D communication, based on the information received by the receiver.

In the embodiment, the controller releases the receiving RLC entity on a basis of the information, at least before a period of time in which the another user terminal releases the transmitting RLC entity is exceeded.

In the embodiment, the information is information of a timer used for the another user terminal to release the transmitting RLC entity.

In the embodiment, a plurality of periods of time for repetitive transmission of data are set in a time direction. The user terminal further comprising a controller configured to release the receiving RLC entity when no data is received from the another user terminal although after data is received from the another user terminal within a first period of time serving as the period of time, a second period of time serving as the period of time subsequent to the first period of time is exceeded.

A user terminal (a transmitting user terminal) according to an embodiment comprises: a controller configured to establish a transmitting RLC entity for transmitting data to another user terminal through D2D communication that is direct device-to-device communication; and a transmitter configured to transmit information related to release of the transmitting RLC entity to the another user terminal.

In the embodiment, the information is information of a timer used for the user terminal to release the transmitting RLC entity.

In the embodiment, a plurality of periods of time for repetitive transmission of data are set in a time direction, and the controller randomly sets a timing at which the same data is transmitted when control of repeatedly transmitting the same data within the period of time is performed.

A user terminal (a receiving user terminal) according to an embodiment comprises: a controller configured to establish a receiving RLC entity for receiving data from another user terminal through D2D communication that is direct device-to-device communication; and a receiver configured to receive information indicating at least one of a start and an end of transmission of data transmitted from the another user terminal through the D2D communication. The controller releases the receiving RLC entity based on the information.

In the embodiment, the information is flag information identifying an interval from a start to an end of one block of the data transmitted from the another user terminal.

In the embodiment, a plurality of periods of time for repetitive transmission of data are set in a time direction, and the controller releases the receiving RLC entity when no data is received from the another user terminal although after data is received from the another user terminal within a first period of time serving as the period of time, a second period of time serving as the period of time subsequent to the first period of time is exceeded.

A user terminal (a transmitting user terminal) according to an embodiment comprises: a controller configured to establish a transmitting RLC entity for transmitting data to another user terminal through the D2D communication that is direct device-to-device communication; and a transmitter configured to transmit information indicating at least one of a start and an end of transmission of data transmitted from the another user terminal through the D2D communication.

In the embodiment, the information is flag information identifying an interval from a start to an end of one block of the data.

Incidentally, in the D2D communication, a method for setting a PDCP parameter and a RLC parameter is not yet defined. Therefore, one of objects of the present application is to provide a technique for setting a PDCP parameter and an RLC parameter used for D2D communication.

A mobile communication system according to an embodiment comprises: a first user terminal configured to transmit a scheduling allocation indicating a position of time and frequency resources for receiving data in the D2D communication, using time and frequency resources within an SA resource pool; and a second user terminal configured to receive the scheduling allocation from the first user terminal using the time and frequency resources within the SA resource pool. The first user terminal establishes a transmitting RLC entity used in the D2D communication based on setting information associated with the SA resource pool. The second user terminal establishes a receiving RLC entity used in the D2D communication based on the setting information associated with the SA resource pool.

A mobile communication system according to an embodiment comprises: a first user terminal configured to establish a transmitting RLC entity for transmitting data through the D2D communication; and a second user terminal configured to establish a receiving RLC entity for receiving data through the D2D communication. The first user terminal transmits data including setting information of a receiving RLC entity. The second user terminal establishes the receiving RLC entity based on the setting information of the receiving RLC entity.

A mobile communication system according to an embodiment comprises: a first user terminal configured to transmit a scheduling allocation indicating a position of time and frequency resources for receiving data in the D2D communication; and a second user terminal configured to receive the scheduling allocation from the first user terminal. The first user terminal transmits the scheduling allocation including setting information of a receiving RLC entity for receiving data in the D2D communication. The second user terminal establishes the receiving RLC entity based on the setting information of the receiving RLC entity.

In the D2D communication, a method of compressing data in a PDCP entity is not yet defined. Therefore, one of objects of the present application is to provide a technique for compressing data in a PDCP entity in D2D communication.

A user terminal according to an embodiment comprises a controller configured to perform data deciphering and data de-compression based on an unchanged parameter in a PDCP entity used in D2D communication that is direct device-to-device communication.

In the embodiment, the unchanged parameter is a maximum value of a context identifier.

It should be noted that the content that follows also is included in the overview of the embodiment.

In an embodiment, a plurality of periods during which data is transmitted repeatedly are arranged in a time direction, and the controller (of the user terminal) randomly sets, if performing control to repeatedly transmit the same data within the periods, a timing at which the identical data is transmitted.

The user terminal according to an embodiment includes a controller configured to compress, on the basis of the unchanged parameter, data, in the PDCP entity used in the D2D communication that is direct device-to-device communication.

In an embodiment, the unchanged parameter is a maximum value of a context identifier.

### [Embodiment]

Hereinafter, the embodiment in a case where a content of the present application is applied to an LTE system will be described.

### (System Configuration)

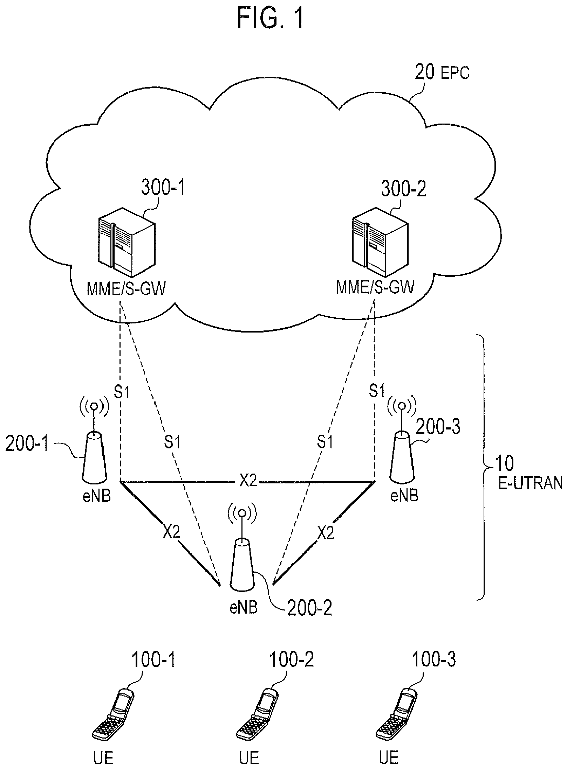

Fig. 1 is a configuration diagram of an LTE system according to an embodiment. As shown in Fig. 1, the LTE system according to the embodiment includes UEs (User Equipments) 100, E-UTRAN (Evolved Universal Terrestrial Radio Access Network) 10, and EPC (Evolved Packet Core) 20.

The UE 100 corresponds to a user terminal. The UE 100 is a mobile communication device and performs radio communication with a connected cell (a serving cell). Configuration of the UE 100 will be described later.

The E-UTRAN 10 corresponds to a radio access network. The E-UTRAN 10 includes eNBs 200 (evolved Node-Bs). The eNB 200 corresponds to a base station. The eNBs 200 are connected mutually via an X2 interface. Configuration of the eNB 200 will be described later.

The eNB 200 manages a cell or a plurality of cells and performs radio communication with the UE 100 that establishes a connection with the cell of the eNB 200. The eNB 200, for example, has a radio resource management (RRM) function, a function of routing user data, and a measurement control function for mobility control and scheduling. It is noted that the "cell" is used as a term indicating a minimum unit of a radio communication area, and is also used as a term indicating a function of performing radio communication with the UE 100.

The EPC 20 corresponds to a core network. A network of the LTE system (a LTE network) is configured by the E-UTRAN 10 and the EPC 20. The EPC 20 includes MME (Mobility Management Entity)/S-GW (Serving-Gateway) 300. The EPC 20 may include an OAM (Operation and Maintenance).

The MME performs various mobility controls and the like, for the UE 100. The S-GW performs control to transfer user data. The MME/S-GW 300 is connected to the eNB 200 via an S1 interface.

The OAM is a server apparatus managed by an operator and performs maintenance and monitoring of the E-UTRAN 10.

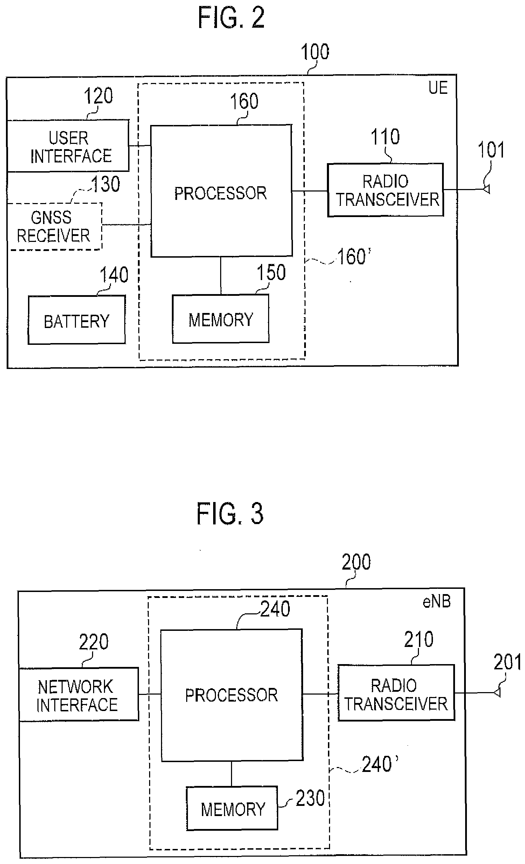

Fig. 2 is a block diagram of the UE 100. As shown in Fig. 2, the UE 100 includes an antenna 101, a radio transceiver 110, a user interface 120, GNSS (Global Navigation Satellite System) receiver 130, a battery 140, a memory 150, and a processor 160. The UE 100 may not have the GNSS receiver 130. Furthermore, the memory 150 may be integrally formed with the processor 160, and this set (that is, a chip set) may be a processor 160' constituting the controller.

The antenna 101 and the radio transceiver 110 are used to transmit and receive a radio signal. The radio transceiver 110 converts a baseband signal (a transmission signal) output from the processor 160 into the radio signal, and transmits the radio signal from the antenna 101. Furthermore, the radio transceiver 110 converts a radio signal (a reception signal) received by the antenna 101 into the baseband signal, and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 corresponds to a controller and executes various processes and various communication protocols described later.

Fig. 3 is a block diagram of the eNB 200. As shown in Fig. 3, the eNB 200 includes a plurality of antennas 201, a radio transceiver 210, a network interface 220, a memory 230, and a processor 240. It is note that the memory 230 may be integrated with the processor 240, and this set (that is, a chipset) may be a processor 240' constituting the controller.

The antenna 201 and the radio transceiver 210 are used to transmit and receive a radio signal. The radio transceiver 210 converts a baseband signal (a transmission signal) output from the processor 240 into the radio signal, and transmits the radio signal from the antenna 201. Furthermore, the radio transceiver 210 converts a radio signal (a reception signal) received by the antenna 201 into the baseband signal, and outputs the baseband signal to the processor 240.

The network interface 220 is connected to the neighbor eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 corresponds to a controller and executes various processes and various communication protocols described later.

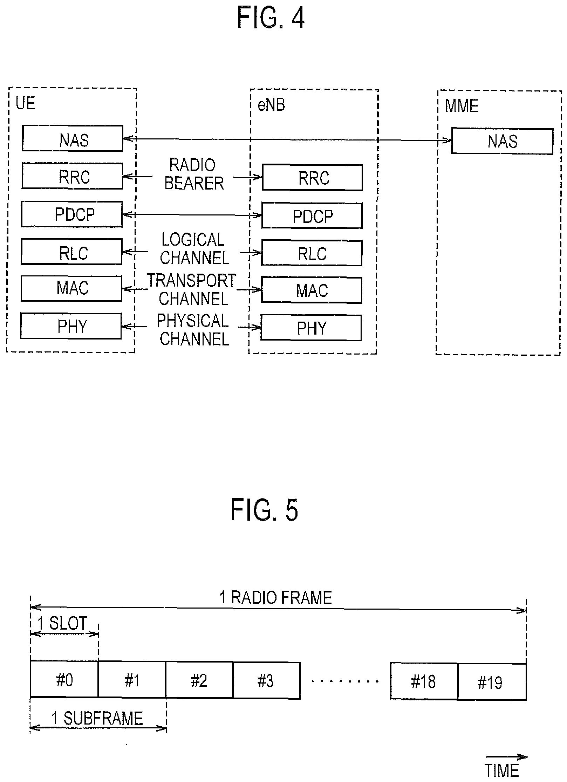

Fig. 4 is a protocol stack diagram of a radio interface in the LTE system. As shown in Fig. 4, the radio interface protocol is classified into a layer 1 to a layer 3 of an OSI reference model, wherein the layer 1 is a physical (PHY) layer. The layer 2 includes MAC (Medium Access Control) layer, RLC (Radio Link Control) layer, and PDCP (Packet Data Convergence Protocol) layer. The layer 3 includes RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, user data and a control signal are transmitted through the physical channel.

The MAC layer performs priority control of data, and a retransmission process and the like by hybrid ARQ (HARQ). Between the MAC layer of the UE 100 and the MAC layer of the eNB 200, user data and a control signal are transmitted via a transport channel. The MAC layer of the eNB 200 includes a scheduler to decide (schedule) a transport format of an uplink and a downlink (a transport block size, a modulation and coding scheme) and an allocated resource block to the UE 100.

The RLC layer transmits data to an RLC layer of a reception side by using the functions of the MAC layer and the PHY layer. Between the RLC layer of the UE 100 and the RLC layer of the eNB 200, user data and a control signal are transmitted via a logical channel.

The PDCP layer performs header compression and decompression, and cipher and decipher.

The RRC layer is defined only in a control plane handling a control signal. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When a connection (an RRC connection) is established between the RRC of the UE 100 and the RRC of the eNB 200, the UE 100 is in an RRC connected state, and when the connection is not established, the UE 100 is in an RRC idle state.

NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiple Access) is employed in a downlink (DL), and SC-FDMA (Single Carrier Frequency Division Multiple Access) is employed in an uplink (UL), respectively.

As shown in Fig. 5, the radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. A resource element is configured by one subcarrier and one symbol. Among radio resources allocated to the UE 100, a frequency resource is configured by a resource block and a time resource is configured by a subframe (or slot).

### (D2D proximity service)

The D2D proximity service will be described below. An LTE system according to an embodiment supports the D2D proximity service. The D2D proximity service is described in the Non Patent Document 1, but an overview thereof is herein described.

The D2D proximity service is a service that enables direct communication to be performed between UEs in a synchronous cluster including a plurality of UEs 100. The D2D proximity service includes a D2D discovery procedure of discovering a nearby UE and D2D communication that is direct communication between UEs. The D2D communication is also referred to as "direct communication."

A scenario in which all the UEs 100 configuring the synchronous cluster are positioned within a cell coverage is referred to as "in coverage." A scenario in which all the UEs 100 configuring the synchronous cluster are positioned out of the cell coverage is referred to as "out of coverage." A scenario in which some UEs 100 configuring the synchronous cluster are positioned within the cell coverage, and the remaining UEs 100 are positioned out of the cell coverage is referred to as "partial coverage."

Within the coverage, for example, the eNB200 serves as a D2D synchronization source. A D2D asynchronization source is synchronized with the D2D synchronization source without transmitting a D2D synchronous signal. The eNB200 serving as the D2D synchronization source transmits D2D resource information indicating radio resources available for the D2D proximity service through a broadcast signal. The D2D resource information includes, for example, information (discovery resource information) indicating radio resources available for the D2D discovery procedure and information (communication resource information) indicating radio resources available for the D2D communication. The UE 100 serving as the D2D asynchronization source performs the D2D discovery procedure and the D2D communication based on the D2D resource information received from the eNB200.

In the out of coverage or the partial coverage, for example, the UE 100 serves as the D2D synchronization source. In the out of coverage, the UE 100 serving as the D2D synchronization source transmits the D2D resource information indicating radio resources available for the D2D proximity service, for example, through the D2D synchronous signal. The D2D synchronous signal is a signal transmitted in a D2D synchronization procedure of establishing synchronization between terminals. The D2D synchronous signal includes a D2DSS and a physical D2D synchronization channel (PD2DSCH). The D2DSS is a signal that provides a synchronization reference of a time and a frequency. The PD2DSCH is a physical channel that carries more information than the D2DSS. The PD2DSCH carries the D2D resource information (the discovery resource information and the communication resource information). Alternatively, when the D2D resource information is associated with the D2DSS, the PD2DSCH may be unnecessary.

The D2D discovery procedure is used mainly when the D2D communication is performed in a unicast manner. One UE 100 that desires to start the D2D communication with the other UE 100 transmits a discovery signal (a D2D discovery signal) using any one of radio resources available for the D2D discovery procedure. The other UE 100 that desires to start the D2D communication with one UE 100 scans the discovery signal within the radio resources available for the D2D discovery procedure and receives the discovery signal. The discovery signal may include information indicating radio resources which one UE 100 uses for the D2D communication.

### (PDCP entity and RLC entity)

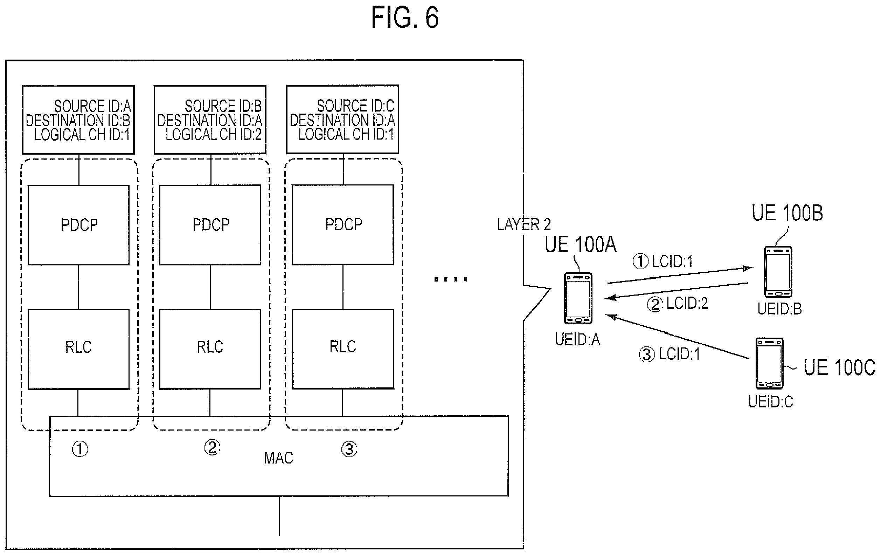

A PDCP entity and an RLC entity which are established for the D2D communication will be described below with reference to FIG. 6. FIG. 6 is a diagram for describing the PDCP entity and the RLC entity in the D2D communication.

The UE 100 that performs the D2D communication establishes the PDCP entity and the RLC entity. The PDCP entity performs the same operation as the PDCP layer in the D2D communication, and the RLC entity performs the same operation as the RLC layer in the D2D communication. In the present embodiment, the RLC entity operates in an unacknowledged mode (the UM). In the UM, data division and combination are performed, but ARQ retransmission is not performed.

The UE 100 that transmits data through the D2D communication establishes a transmitting PDCP entity and a transmitting RLC entity (hereinafter, referred to as a "transmitting entity"). On the other hand, the UE 100 that receives data through the D2D communication establishes a receiving PDCP entity and a receiving RLC entity (hereinafter, referred to as a "receiving entity").

In order to specify the transmitting entity and the receiving entity, an ID (a transmission source ID: a source Layer 2 ID) identifying a transmission source, an ID (a transmission destination ID: a destination Layer 2 ID) identifying a transmission destination, and an ID (LCID) identifying a logical channel are used.

The transmitting entity is established when data that is to be transmitted (that should be transmitted) through the D2D communication is generated. On the other hand, the receiving entity is established when first data is received through the D2D communication but a corresponding receiving RLC entity is not established. Thus, when the respective IDs (the transmission source ID, the transmission destination ID, and the LCID) of the first data are not identical to the respective IDs of the existing receiving entity, the receiving entity is established.

Specifically, in order to transmit data to the UE 100B, the UE 100A establishes the transmitting PDCP entity and the transmitting RLC entity (hereinafter, referred to as a "first transmitting entity") as illustrated in FIG. 6. In the first transmitting entity, the transmission source ID is "A (the UE 100A)," the transmission destination ID is "B (the UE 100B)," and the LCID is "1."

Further, in order to receive data from the UE 100B, the UE 100A establishes the receiving PDCP entity and the receiving RLC entity (hereinafter, referred to as a "second receiving entity"). The UE 100A establishes the second receiving entity in which the transmission source ID is "B," the transmission destination ID is "A," and the LCID is "2" based on the first data (and the IDs) received from the UE 100B.

Similarly, the UE 100A establishes a third receiving entity in which the transmission source ID is "C (the UE 100C)," the transmission destination ID is "A," and the LCID is "1" based on the first data (and the IDs) received from the UE 100C.

The UE 100A transmits data to the UE 100B through the first transmitting entity, receives data from the UE 100B through the second receiving entity, and receives data from the UE 100C through the third receiving entity.

### (Operation according to embodiment)

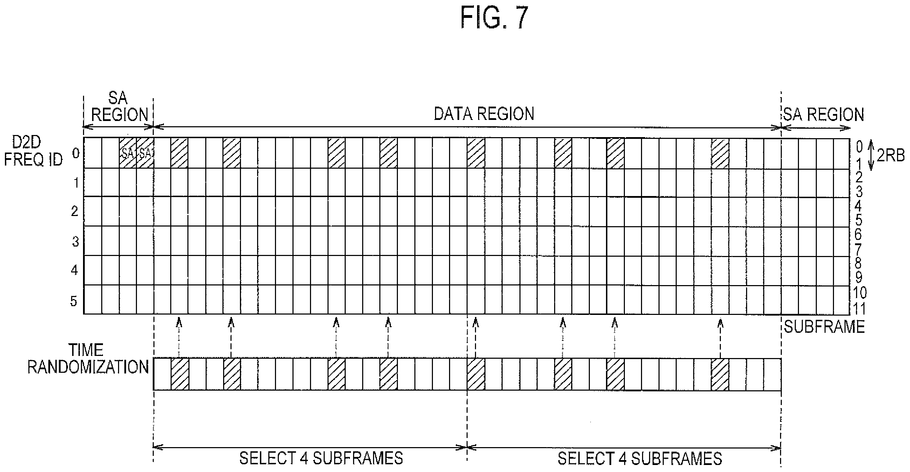

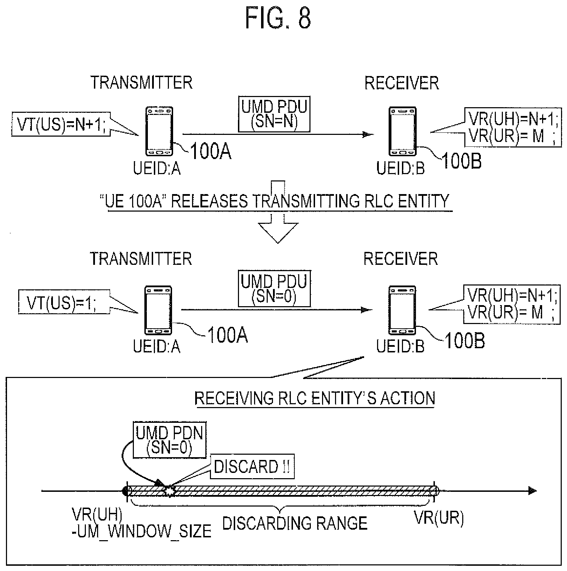

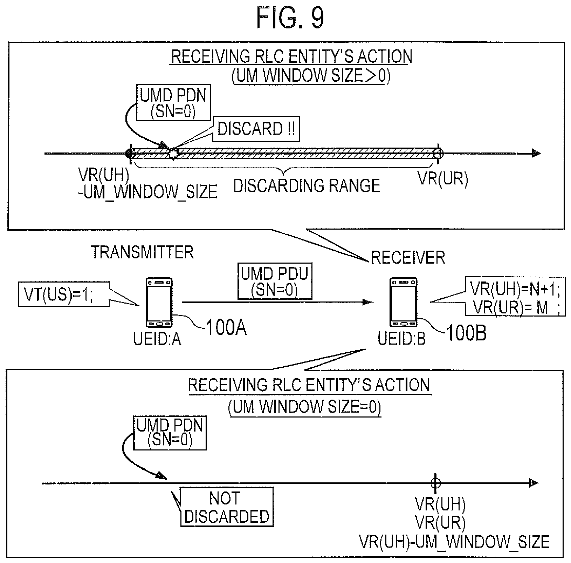

An operation according to an embodiment will be described below with reference to FIGS. 7 to 9. FIG. 7 is a diagram illustrating an example for describing an arrangement of time and frequency resources used in the D2D communication according to the present embodiment. FIG. 8 is a diagram for describing an operation of the UE 100 in the D2D communication. FIG. 9 is a diagram for describing an operation (a second operation which will be described later) of the UE 100 in the D2D communication.

In the present embodiment, the UE 100 that transmits data through the D2D communication repeatedly transmits the same data within a period of time for repetitive transmission of data. As the period of time (hereinafter, the repetitive transmission period of time), a plurality of periods of time are set in a time direction.

The UE 100 selects radio resources used for transmission of data from among time and frequency resources in a data region (a data resource pool) periodically arranged in the time direction. For example, when timings to transmit the same data are randomly set in the time direction, the UE 100 randomly selects four subframes from among time and frequency resources in the first half of the data region, and randomly selects four subframes from among time and frequency resources in the second half of the data region as illustrated in FIG. 7. The UE 100 repeatedly transmits certain data using the four subframes selected from among the time and frequency resources in the first half of the data region, and repeatedly transmits another data using the four subframes selected from among the time and frequency resources in the first half of the data region. In this case, the durations of the first half and the second half of the data region correspond to the repetitive transmission period of time. Alternatively, the UE 100 repeatedly transmits certain data using eight subframes selected from among the time and frequency resources of the data region. In this case, the duration of the data region corresponds to the repetitive transmission period of time.

Since the UE 100 randomly timings to transmit the same data in the time direction, it is possible to prevent data transmitted from the UE 100 from continuously colliding with data transmitted from another UE. As a result, the receiving UE can receive at least one piece of data among a plurality of pieces of data (same data) that are repeatedly transmitted from the UE 100.

The UE 100 selects radio resources for transmitting a scheduling assignment (SA) indicating a position of (radio resources for) data transmitted through the D2D communication from among time and frequency resources in an SA region (an SA resource pool) which are periodically arranged in the time direction. In the example of FIG. 7, since the frequency position of the SA is identical to the frequency position of the radio resource for data, the receiving UE can recognize the frequency position of data based on the frequency position of the SA.

An example in which the UE 100A that has transmitted data to the UE 100B through the D2D communication releases the transmitting RLC entity, then newly establishes the transmitting RLC entity, and transmits data to the UE 100B will be described below (see FIG. 8).

First, the UE 100A that is performing the D2D communication transmits data (specifically, a packet (a UMD PDU)) in which the SN number is N at a certain timing. As a result, a VT (US) in the UE 100A becomes N+1. Here, the VT (US) is a state variable holding an SN value allocated to a newly generated UMD PDU. An initial value of the VT (US) is set to, for example, 0 (zero), and the VT (US) is updated each time the transmitting RLC entity in the UM transmits the UMD PDU in which the SN is the VT (US).

Meanwhile, the UE 100B receives the data (the UMD PDU) in which the SN value is N from the UE 100A. As a result, a VR (UH) of the UE 100B becomes N+1. The VR (UR) of the UE 100B becomes M (≤ N + 1). Here, the VR (UR) is a UM reception state variable, and holds the earliest SN value of the UMD PDU for which reordering is considered. The UE 100B may set an SN value of data (first data received from the UE 100A) serving as a trigger for establishing the receiving RLC entity as an initial value of the VR (UR). In the present embodiment, the SN value of the first data (the UMD PDU) received from the UE 100A is set as the initial value of the VR (UR). The VR (UH) is a highest UM reception state variable, and holds an SN value next to an SN value of a UMD PDU having the highest SN among the received UMD PDUs. The VR (UH) undertakes a high order end of a reordering window. The UE 100B may set an SN value of data (first data received from the UE 100A) serving as a trigger for establishing the receiving RLC entity as an initial value of the VR (UH). In the present embodiment, the SN value of the first data (the UMD PDU) received from the UE 100A is set as the initial value of the VR (UH).

The UE 100B discards the data (the UMD PDU) having a sequence number (an SN value) positioned within the range of the reordering window in the receiving RLC entity under a certain condition. Specifically, the UE 100B (the receiving RLC entity) that has received from a UMD PDU in which the SN is x from a lower layer discards the received data (the UMD PDU) when "VR (UR) < x < VR (UH)" is satisfied, when the UMD PDU in which the SN is x has been previously received, or when "(VR (UH) - UM_Window_Size) <= x < VR (UR)" is satisfied.

Further, when an SN value of data satisfies "(VR (UH) - UM_Window_Size) <= SN < VR (UH)," the SN value is positioned within the range of the reordering window (that is, falls within the reordering window). Thus, UM_Window_Size indicates the range of the reordering window. Further, UM_Window_Size is a constant that is used by the receiving RLC entity in order to define an SN of a UMD PDU that can be received without moving the reordering window forward.

On the other hand, data that has a sequence number positioned within the range of the reordering window and does not satisfy the certain condition is input to a receiving buffer. The data in the receiving buffer is sorted in an SN order, reconstructed as an RLC SDU, and then transferred to an upper layer.

Then, when transmission of data to be transmitted to the UE 100B is completed, the UE 100A releases the transmitting RLC entity (and the transmitting PDCP entity). Thereafter, when new data to be transmitted to the UE 100B is generated, the UE 100A establishes a new transmitting RLC entity. Meanwhile, since the release of the receiving RLC entity (and the receiving PDCP entity) depends on an implementation of the UE 100B, the UE 100B may maintain the receiving RLC entity. In this case, similarly to the existing cellular communication, the UE 100A is considered to set the SN value to the initial value (that is, "0") in the new transmitting RLC entity and start transmission of data.

Specifically, the UE 100A transmits new data (UMD PDU) in which the SN value is 0 as illustrated in FIG. 8. As a result, the VT (US) of the UE 100A becomes 1 (one). Meanwhile, the UE 100B receives the new data (UMD PDU) in which the SN value is 0 from the UE 100A. Here, when the UE 100A uses the same LCID in the released transmitting RLC entity and the newly established transmitting RLC entity, the UE 100B performs a process of receiving new data from the UE 100A through the receiving RLC entity being maintained thereby. Since the UE 100B (the receiving RLC entity) has the VR (UH) of N+1 and the VR (UR) of M (≤ N+1), the deviation in the SN value occurs between the UE 100A and the UE 100B. Thus, as illustrated in FIG. 8, "(VR (UH) - UM_Window_Size) <= 0 (= x) < VR (UR)" is satisfied, and the UE 100B is likely to discard the received new data in the receiving RLC entity.

In this regard, in the present embodiment, it is possible to prevent the UE 100B from regarding the new data as previously received data and discarding the new data through any one of the following operations (first to third operations).

### (A) First operation

First, a first operation will be described. In the first operation, the UE 100A transmits information (hereinafter, referred to as "release information") related to release of the transmitting RLC entity to the UE 100B. The UE 100B receives the release information from the UE 100A.

The release information is, for example, information of a timer (an in-activity timer) used for the UE 100A to release the transmitting RLC entity. When a plurality of timers having different lengths are specified in order to release the transmitting RLC entity, the UE 100A transmits information (for example, flag information) indicating a timer to be used among a plurality of timers as the release information.

A notification of the release information may be given from the UE 100A to the UE 100B through a MAC CE. A notification of information of a plurality of specified timers may be given to each UE through a SIB, or information of a plurality of specified timers may be set to each UE in advance.

The UE 100B may release the receiving RLC entity for receiving data from the UE 100B based on the release information. Specifically, the UE 100B releases the receiving RLC entity at least before a time at which the UE 100A releases the transmitting RLC entity is exceeded. The UE 100B may release the receiving RLC entity at the same time at which the transmitting RLC entity is released depending on the implementation of the UE 100B, or may release the receiving RLC entity before a time at which the transmitting RLC entity is released.

As a result, the transmitting RLC entity can be prevented from being released before the receiving RLC entity is released. As a result, the UE 100B can be prevented from regarding the new data as the previously received data and discarding the new data.

Further, even when the UE 100B releases the receiving RLC entity before the transmitting RLC entity is released, the UE 100B establishes the receiving RLC entity using the SN value of data transmitted from the UE 100A as the initial value, and thus the deviation in the SN value does not occur between the UE 100A and the UE 100B. Thus, although data is transmitted by the transmitting RLC entity being maintained thereby after the receiving RLC entity is released, there is no problem.

Alternatively, when data is received from the UE 100A after the transmitting RLC entity is released based on the release information, the UE 100B may regard the received data as new data and perform a process without discarding the received data. For example, when the UE 100B is maintaining the receiving RLC entity, a process of adding a correction value to an SN value of new data may be performed.

Alternatively, when the timer (the in-activity timer) of the UE 100A is determined to have expired based on the release information, the UE 100B may transfer all data held in the receiving RLC entity to the upper layer and then process subsequently received data as new data. For example, when a timer set based on the release information expires, the UE 100B may transfer all data in the receiving buffer to the upper layer and then perform a process of initializing at least the SN value of the receiving RLC entity.

### (B) Second operation

Next, a second operation will be described with reference to FIG. 9. In the second operation, the UE 100B sets UM_Window_Size to 0.

As described above, when UM_Window_Size is larger than 0, the UE 100B (the receiving RLC entity) is likely to discard received new data. Thus, the UM 100B sets UM_Window_Size to 0 in the receiving RLC entity. Thus, since the sequence number of the received data is not positioned within the range of the reordering window, the UE 100B transfers the received data to the upper layer (specifically, the receiving PDCP entity) in the receiving RLC entity without discarding the received data. As a result, it is possible to prevent the new data from being regarded as the previously received data and discarded.

Further, when UM_Window_Size is set to 0, data reordering is not performed in the receiving RLC entity, and received data is transferred to the upper layer. Thus, when reordering is unnecessary in the receiving RLC entity, the UE 100 may set UM_Window_Size to 0.

For example, the UE 100B may set UM_Window_Size to 0 according to a type of data transmitted through the D2D communication. Specifically, the UE 100B may set UM_Window_Size to 0 when data is data that needs to be processed in real time such as audio data or video data (for example, when an allowable delay of data is equal to or larger than a certain value) and may set UM_Window_Size to a normal size when data is document data.

Alternatively, the UE 100B may set UM_Window_Size to 0 according to the destination (the transmission destination ID) of data transmitted through the D2D communication. Specifically, the UE 100B may set UM_Window_Size to 0 when the transmission destination ID is an ID indicating groupcast or broadcast, and may set UM_Window_Size to a normal size when the transmission destination ID is an ID indicating unicast (the UE 100B).

Alternatively, the UE 100B may set UM_Window_Size to 0 according to an application used in the D2D communication. Specifically, the UE 100B may set UM_Window_Size to 0 when the application is an application intended for voice communication or video communication, and may set UM_Window_Size to a normal size when the application is an application intended for transfer of document data.

### (C) Third operation

Next, a third operation will be described. In the third operation, the UE 100A transmits information indicating at least one of a start and an end of transmission of data. The UE 100B releases the receiving RLC entity based on the information.

For example, the UE 100A starts transmission of data after transmitting a code indicating a start of transmission of data as the information. Alternatively, the UE 100A transmits the information together with first data. As the information is received, the UE 100B can recognize that transmission of data has been started by the UE 100A. Thus, the UE 100B can determine that data received after the information is received is new data. Accordingly, it is possible to prevent the new data from being regarded as the previously received data and discarded.

The UE 100A may transmit the information through the MAC CE or may add the information to a MAC subheader of first data and transmit the resulting data.

Alternatively, the UE 100A transmits a code indicating an end of transmission of data as the information after finishing transmission of data. Alternatively, the UE 100B transmits the information together with last data. As the information is received, the UE 100B can recognize that the UE 100A has finished transmission of data. Thus, the UE 100B can determine that data received after the information is received is new data transmitted through the new transmitting RLC entity. Accordingly, it is possible to prevent the new data from being regarded as the previously received data and discarded.

The UE 100A may transmit the information through the MAC CE or may add the information to a MAC subheader of last data and transmit the resulting data.

Alternatively, the UE 100A transmits flag information (an identifier) identifying an interval from a start to an end of one block of data as the information. Specifically, the UE 100A increases a variable indicating the flag information each time a block of data is changed. For example, when the flag information is configured with one bit, the flag information is changed like 0, 1, 0, 1, ... each time a block of data is changed. When the flag information is configured with two bits, the flag information is changed like 0, 1, 2, 3, 0, 1, ... each time a block of data is changed.

Accordingly, the UE 100B can determine that received data is a block of new data according to the change in the flag information. Thus, although received data is discarded, the UE 100B can establish a new receiving entity and process the data in the new receiving entity when the data is identified to be a block of new data based on the flag information. Alternatively, the UE 100B may correct the SN value without discarding the data in the new receiving entity and then process the data.

The flag information may be necessarily transmitted together with data when data is transmitted. In this case, for example, the flag information can be necessarily transmitted together with data such that the flag information is included in a MAC subheader of data together with the transmission source ID, the transmission destination ID, and the LCID. Alternatively, the flag information may be transmitted when transmission of data starts and when transmission of data ends or may be appropriately transmitted when transmission of data is performed. In this case, the flag information may be transmitted through the MAC CE or may be transmitted through a dedicated MAC subheader.

In the third operation, for example, when data is audio data, a start and an end of transmission of data may be decided by detection of an unvoiced interval and a voiced interval. Further, when data is document data, one piece of document data may be dealt as one block, or each of a plurality of pieces of data generated by dividing one piece of document data may be dealt as one block. In a push to talk (PTT), switching from OFF to ON may be regarded as a start of transmission of data, and switching from ON to OFF may be regarded as an end of transmission of data.

### [Other embodiments]

In the above embodiment, the UE 100A repeatedly transmits the same data within the repetitive transmission period of time. In this case, the UE 100B may release the receiving RLC entity when no data is received from the UE 100A although after receiving data from the UE 100A within a first repetitive transmission period of time a second repetitive transmission period of time subsequent to the first repetitive transmission period of time is exceeded. It is because when no data is received within the second repetitive transmission period of time in which data is subsequently transmitted from the UE 100A, the UE 100B can determine that transmission of data from the UE 100A has ended. As a result, it is possible to suppress the deviation in the SN value occurring as the receiving RLC entity is continuously maintained.

The repetitive transmission period of time may be a value set according to an application used in the D2D communication. For example, the repetitive transmission period of time set for an operation intended for voice communication or video communication may be smaller than that set for an application intended for transfer of document data. Alternatively, the repetitive transmission period of time may be set only when an application is intended for voice communication or video communication.

Further, setting information for repeatedly transmitting the same data within the repetitive transmission period of time in the D2D communication may be set to each of the respective UEs 100 (each of the UE 100A and the UE 100B) in advance or may be transmitted to each of the respective UEs 100 through the SIB. Thus, the UE 100A and the UE 100B can share the repetitive transmission period of time.

Further, in the above embodiment, when the same data is repeatedly transmitted to the UE 100B (in the unicast manner) rather than the broadcast manner and the groupcast manner, the UE 100A may change a transmission antenna weight each time transmission is performed. In this case, when the transmission antenna weight is constant, all a plurality of transmissions may have a bad reception quality, but when the transmission antenna weight is changed each time transmission is performed, at least one of a plurality of transmissions can have an improved reception quality.

Further, in the above embodiment, the frequency position of the SA is the same as the frequency position of the radio resource for data, but embodiments are not limited thereto. For example, the frequency position of the radio resource for data may be randomly decided. In this case, information indicating the frequency position of the radio resource for data may be included in the SA, and, for example, the frequency position of the radio resource for data may be associated with the frequency position of the SA so that the frequency position of the radio resource for data is randomly decided according to the frequency position of the SA.

Further, in the above embodiment, the UE 100A repeatedly transmits the same data within the repetitive transmission period of time, but embodiments are not limited thereto. Even when the UE 100 does not repeatedly transmit the same data (or, when the repetitive transmission period of time is not set), the receiving UE can prevent the new data from being regarded as the previously received data and discarded through at least one of the first to third operations.

Further, in the above embodiment, when the UE 100A transmits audio data (an audio packet) through the D2D communication, the UE 100A may divide one packet into a plurality of subframes and transmit one packet through one subframe instead of transmitting a plurality of divided packets. In this case, since the packet is not divided, the UE 100B can transfer the packet to the upper layer without performing a process of combining the packets (the RLC PDUs) in the receiving RLC entity. Thus, since reordering in the upper layer when UM_Window_Size is set to 0 is unnecessary, it is effective particularly in the second operation.

Further, in the above embodiment, when the UE 100A releases the transmitting RLC entity according to an instruction (signaling) given from the upper layer, the UE 100A may hold the transmission destination ID and the LCID used by the transmitting RLC entity and the SN value of data transmitted last until a certain period of time elapses after the instruction is received.

When new data to be transmitted to UE 100B through the transmitting RLC entity that is instructed to be released is generated before a certain period of time elapses, the UE 100A transmits the new data through any one of the following methods.

Firstly, when the UE 100A transmits data to the UE 100B using the same LCID as the held LCID, the UE 100A starts transmission of new data using an SN value next to an SN value of data that is transmitted last in the transmitting RLC entity. Thus, when the UE 100B does not release the receiving RLC entity, since an SN value of new data is an SN value subsequent to that of previous data, the UE 100B can process the new data without discarding the new data in the receiving RLC entity.

Secondly, the UE 100A transmits new data to the UE 100B using a different LCID from the held LCID. Thus, even when the UE 100B does not release the receiving RLC entity, a new receiving RLC entity is established since new data having the different LCID is received. Accordingly, the UE 100B processes the new data in the new receiving RLC entity and thus does not discard the new data.

Here, a certain period of time is set to, for example, a period of time longer than a timer until the receiving RLC entity is released after the receiving RLC entity is not used.

Further, in the second operation, UM_Window_Size is set to 0, but embodiments are not limited thereto. UM_Window_Size may be set to a value smaller than a prescribed value. In the LTE system, since the prescribed value of UM_Window_Size is 2SN Length/2 (the (SN bit length/2)-th power of 2), for example, UM_Window_Size may be set to 2SN Length/x (X > 2). Specifically, the UE 100B may set UM_Window_Size to 2SN Length/2. As a result, since the range of the reordering window is reduced, a sequence number of received data becomes difficult to be positioned within the range of the reordering window, and thus it is possible to perform the reordering process while preventing the received data from being discarded.

Further, when an SN value of data is out of the range of the reordering window in the receiving RLC entity due to the occurrence of deviation in an SN value between the UE 100A and the UE 100B, the reordering window is moved based on an SN value of new data. In this case, in the D2D communication, data in the receiving buffer may be not processed (or discarded) before the reordering window is moved. However, in the first operation and the third operation, the movement of the reordering window can be prevented, and thus this problem can be solved.

Further, in the above embodiment, the UE 100B sets an SN value of data (first data) serving as a trigger for establishing the receiving RLC entity as the initial value of the VR (UR), but embodiments are not limited thereto. The UE 100B may set the initial value of the VR (UR) to a value smaller than an SN value of data serving as a trigger for establishing the receiving RLC entity. For example, when an SN value of first data received from the UE 100A is N+1, the UE 100B may set the initial value of the VR (UR) to "(N + 1) - (UM_Window_Size/x)" (x is an arbitrary number). Thus, in the following case, it is possible to prevent the new data from being regarded as the previously received data and discarded.

First, the UE 100B that performs the D2D communication with the UE 100A releases the receiving RLC entity and then receives data in which the SN value is N+1 from the UE 100A that is maintaining the transmitting RLC entity without releasing the transmitting RLC entity. Thus, the UE 100B establishes the new receiving RLC entity, and receives data from the UE 100A. The UE 100B sets N+1 serving as the SN value of the data serving as the trigger for establishing the receiving RLC entity as the initial value of the VR (UR). Then, the UE 100A is assumed to have transmitted data having an SN value (for example, N) before data is received by the new receiving RLC entity to the UE 100B without transmitting data according to the SN value order. For example, when data is repeatedly transmitted or retransmitted at a PHY level, the UE 100B hardly transmit data according to the SN value order. In this case, "(VR (UH) - UM_Window_Size) < N < VR (UR) (= N + 1)" is satisfied, and even when the UE 100B can normally receive data that is repeatedly transmitted or retransmitted at the PHY level, the UE 100B is likely to discard the data. However, as the UE 100B sets the initial value of the VR (UR) to the value smaller than the SN value of the data serving as the trigger for establishing the receiving RLC entity, a data discarding target range is reduced, and thus it is possible to prevent the new data from being regarded as the previously received data and discarded.

The UE 100B may set the initial value of the VR (UR) to the value smaller than the SN value of the first data according to a type of data transmitted through the D2D communication or may set the initial value of the VR (UR) to the value smaller than the SN value of the first data according to the destination of data transmitted through the D2D communication. For example, when a type of data is data that need not be processed in real time (for example, an allowable delay of data is equal to or larger than a certain value), the UE 100B may set the initial value of the VR (UR) to the value smaller than the SN value of the first data. Alternatively, when the transmission destination ID is an ID indicating the groupcast or the broadcast, the UE 100B may set the initial value of the VR (UR) to the value smaller than the SN value of the first data. Thus, it is possible to prevent the new data from being regarded as the previously received data and discarded without lowering the communication quality.

Further, in the above embodiment, the RLC entity operates in the UM, and embodiments are not limited thereto. The RLC entity may operate in an acknowledged mode (AM). In the AM, not only data division and assembly but also ARQ retransmission when transmission of the RLC PDU fails are performed. As retransmission is performed doubly through an HARQ in the MAC layer and an ARQ in the RLC entity, high reliability can be obtained.

In the above embodiment, the LTE system has been described as an exemplary mobile communication system, but embodiments are not limited to the LTE system, and the present application may be applied to a system rather than the LTE system.

### [Additional Statement 1]

A supplementary matter of the embodiment is provided below.

### (1) Introduction

The release timing of the transmitting PDCP/RLC entity was not agreed yet. In this additional statement, the need to align the transmitting and receiving PDCP/RLC configurations as well as the proper release procedure to prevent unnecessary UMD PDU discarding is considered.

### (2) Discussion

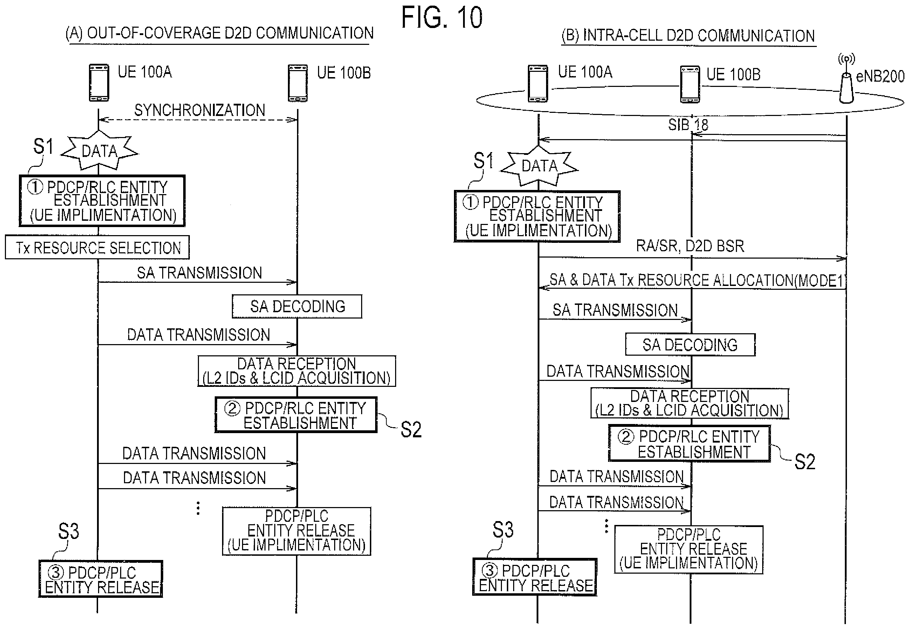

The procedure for D2D communication can be described as follows. (See Fig. 10.) Fig. 10 is a diagram indicating examples of out-of-coverage D2D communication and in-coverage D2D communication.

The out-of-coverage D2D communication (A) will be briefly described. As shown in Fig. 10, in the out-of-coverage D2D communication (A), the UE 100A and UE 100B are located outside of the coverage.

Firstly, the UE 100A and UE 100B synchronize. After that, Data is generated in the UE 100A. The data is data to be transmitted to the UE 100B. The UE 100A establishes a transmitting PDCP / RLC entity (step 1). This operation is the operation of UE implementation. Next, the UE 100A selects a transmission resource. The UE 100 A transmits control information (SA) for notifying the selected transmission resource. UE 100B receives the control information from UE 100A. The UE 100B decodes the received SA. The UE 100B grasps transmission resources used for data transmission based on the decoded SA. Next, the UE 100A transmits data. The UE 100B receives the data based on the grasped transmission resource. The UE 100B acquires the L2 ID and LCID. The UE 100B establishes a receiving PDCP / RLC entity (step 2). Next, the UE 100A transmits data. The UE 100B receives the data. The UE 100 B releases the receiving PDCP / RLC entity. This operation is the operation of UE implementation. The UE 100A releases the transmitting PDCP / RLC entity (step 3).

Next, the in-coverage D2D communication (B) will be briefly described. It should be noted that the description of the same parts as in the out-of-coverage D2D communication (A) is omitted as appropriate. As shown in FIG. 10, in in-coverage D2D communication (B), the UE 100 A and the UE 100 B are located within the coverage of the cell of the eNB 200.

Firstly, the eNB 200 transmits system information block (SIB 18) by broadcasting. The UE 100A and the UE 100B receive the system information block.

Data is generated in the UE 100A. The UE 100A establishes a transmitting PDCP / RLC entity (step 1). UE 100A transmits a random access preamble (RA) or a scheduling request (SR) and sends buffer status report (BSR) in D2D communication. The eNB 200 transmits SA resource allocation and data transmission resource allocation to the UE 100A based on the BSR. The UE 100A transmits the SA to the UE 100 B based on the SA resource allocation. Note that the SA indicates data transmission resource allocation received from the eNB 200. The UE 100 B decodes the SA. Based on the decoded SA, the UE 100B grasps a transmission resource (data transmission resource allocation) used for data transmission. The subsequent operation is the same as the out-of-coverage D2D communication (A).

As indicated in the PDCP and RLC related procedures in Fig. 10, a few open issues still need to be resolved, especially for steps 1, 2 and 3. These issues are discussed in detail below.

### (2.1) PDCP/RLC configuration mismatches

Regarding steps 1 and 2, when PDCP and RLC entities are established, the configuration of PDCP/RLC related parameters has not been decided yet. The parameters to be configured are described in Table 1. Table 1 is parameters for PDCP and RLC configurations.

**[Table 1]**

| Parameters for PDCP | Parameters for RLC |
|---|---|
| - discardTimer (only for transmitting PDCP entity) | - t-Reordering (only for reception RLC entity) |
| - maxCID | - SN-FieldLength |
| - pdcp-SN-Size | |
| - profiles | |

Since the discardTimer (for PDCP) is only meant to be used by the transmitting entity and t-Reordering (for RLC) is only meant to be used by the receiving entity, these values do not need to be shared between transmitting and receiving entities (Tx and Rx entities). However, the other parameters listed in Table 1 do need to be shared between transmitting and receiving entities in order for the PDUs to be processed correctly. According to the current specification for cellular, these parameters are configured to UEs 100 via the RRC signalling, so the UEs 100 and eNB 200 share common values. However, for D2D, it already agreed not to establish receiving PDCP/RLC entity via RRC signalling. Instead receiving PDCP/RLC is established according to the first received UMD PDU. In particular, for the out-of-coverage scenario (Fig. 10(A)), UEs 100 (D2D UEs) cannot receive the RRC signalling, so both transmitting and receiving PDCP/RLC entities need to coordinate the values through other means.

For the out-of-coverage scenario, the simplest way to coordinate the values for PDCP/RLC configuration is to depend on pre-configuration. If every parameter in Tab le 1 has only one possible value then pre-configuration may be a viable solution. But if more than one values for each parameter need to be supported, an alternative solution may be needed as suggested below.

For the in-coverage scenario, especially for intra-cell deployment scenario (Figure 10(B)), both transmitting D2D UE (UE 100A) and receiving D2D UE (UE 100B) can receive the signal from the serving cell. Therefore, UEs 100 (D2D UEs) can use SIB in order to obtain the values for PDCP/RLC configuration. As for the inter-cell deployment scenario, UE 100 (D2D UE) can also use SIB, if serving cell's SIB includes neighbouring cell's PDCP/RLC configuration as neighbouring cell's information. For the out-of-coverage scenario, the solution will depend on whether every parameter in Table 1 has more than one value.

For the partial coverage scenario, in order to align the PDCP/RLC configuration of the in-coverage UE 100 and the out-of-coverage UE 100, a transmitting UE 100 (Tx D2D UE) will need to provide the values for PDCP/RLC configuration to the receiving UE 100 (Rx D2D UE).
- Proposal 1: It should discuss whether the transmitting UE 100 (the transmitting D2D UE) is allowed to autonomously select the desired values for PDCP/RLC configuration.

If the transmitting UE 100 is not allowed to select PDCP/RLC configuration autonomously, one PDCP/RLC configuration needs to be specified between transmitting and receiving PDCP/RLC entities. For D2D Communication, both transmitting and receiving UEs can share the receiving SA resource pool, therefore, one possibility is for the same PDCP/RLC configuration to be shared per a SA reception resource pool. This has the potential to be applicable for all D2D scenarios, including Out-of-coverage, In-coverage and Partial-coverage scenarios.
- Proposal 2: If transmitting UE is not allowed to select PDCP/RLC configuration autonomously, one PDCP/RLC configuration may be specified per SA reception resource pool.

However, if the transmitting UE 100 (transmitting D2D UE) is allowed to select the PDCP/RLC configuration autonomously, the following alternatives should be considered as a means for the transmitting UE 100 to share the configured values with the receiving UE.
- ALT.1: Delivering via MAC sub-header
- ALT.2: Delivering via SA
- ALT.3: Delivering via PD2DSCH

ALT.1 and ALT.2 can be applied to all scenarios; however, ALT 3 can't be applied to UEs 100 unless the transmitting UE 100 (transmitting D2D UE) is also the synchronization source. In particular, for in-coverage scenario, it is assumed that majority of UEs 100 (D2D UEs) are not synchronization source, so ALT 3 should be precluded.
- Proposal 3: If transmitting UE 100 (transmitting D2D UE) could select PDCP/RLC configuration autonomously, it should discuss which of the two alternatives (ALT.1 or ALT.2) should be adopted for the delivery of the selected PDCP/RLC configuration to the receiving UE 100.

### (2.2) Release timing of PDCP and RLC entities

With respect to the issue of PDCP/RLC release timing (step 3 in Fig. 3), it currently assumes the PDCP entity and the RLC entity must be established and released together; however, there is no agreement on whether the transmitting and receiving entities should be coordinated. The release timing of transmitting PDCP/RCL entity has impact on successful reception of UMD PDU at the receiving RLC entity. The impact on the release timing of the PDCP/RLC entities is further discussed in detail below.

As shown in Fig. 8 above, if a transmitting RLC entity (ex. source ID: A, destination ID: B, LCID: 0) is released earlier than a receiving RLC entity (ex. source ID: A, destination ID: B, LCID: 0) and the transmitting RLC entity with the same configuration (source ID: A, destination ID: B, LCID: 0) is established again before the receiving RLC entity is released, the receiving RLC entity will discard UMD PDUs for D2D Communication due to the inconsistency between the transmitting RLC entity's SN (ex. SN = 0) and the receiving RLC entity's SN. (ex. VR(UH) & VR(UR) = N+1)

The above issue will occur if the release timing of the receiving RLC entity is up to UE implementation. In order to solve the above issue, the following alternatives may be considered.

### ALT. 1: Introduce a common timer between the transmitting RLC entity and the receiving RLC entity

In order to prevent the receiving RLC entity from staying active for a prolonged duration, unnecessarily, it is useful to introduce an "in-activity timer" which indicates the maximum time the RLC entity may stay active after receiving the last UMD PDU.

If this timer is introduced, the release timing of the transmitting RLC entity and the receiving RLC entity can be properly coordinated and the discarding of the UMD PDUs at the receiving RLC entity may be avoided.

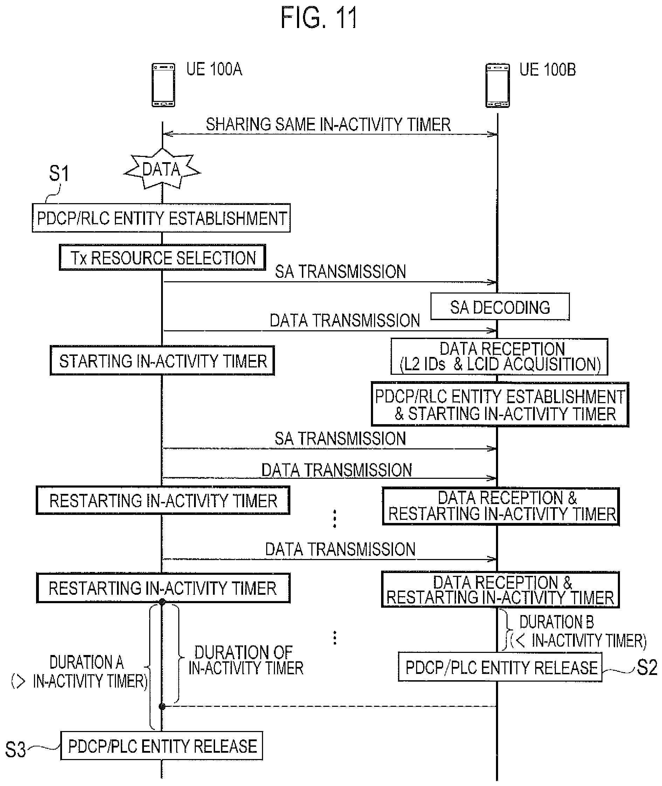

For example, the transmitting RLC entity will not be released while the in-activity timer is running. Alternatively, the transmitting RLC entity may refrain from using the same LCID which is previously used while the in-activity timer is running. The detailed procedure is depicted in Fig. 11. Fig. 11 is a diagram indicating example of in-activity timer related actions. Explanation of portions similar to those in Fig. 10 will be omitted.

In Fig. 11, the UE 100A starts a valid timer after sending the data. Each time the UE 100A transmits data, the UE 100A restarts the valid timer. On the other hand, the UE 100B establishes the PDCP / RLC entity and starts a valid timer. Each time the UE 100 B receives data, the UE 100 B restarts the active timer.

The UE 100A releases the transmitting PDCP / RLC entity after a duration A longer than the duration (activation time) of the valid timer expires (step S3). That is, the UE 100A releases the transmitting PDCP / RLC entity after expiration of the valid timer. On the other hand, the UE 100B releases the reception PDCP / RLC entity after a duration B longer than the duration of the valid timer expires (step S 2). That is, the UE 100B releases the receiving PDCP / RLC entity before expiration of the valid timer.

### ALT. 2: Setting the reordering window size to "zero"

This approach is the same for MBMS transmission. With D2D Communication, re-transmission scheme is yet to be agreed, therefore, "zero-size" re-ordering window might be useful based on the current agreements for D2D Communication. However, the repetition scheme for D2D Communication transmission is still under discussing in RAN1, and such repetition scheme might cause out-of-order delivery of UMD PDU from lower layer. The need for this solution will largely depend on whether RAN1 can reach an agreement for a repetition scheme at the next meeting.

Taking into account of the pros and cons of the above alternatives, it is assumed the D2D UE should release the transmitting RLC entity after the in-activity timer expiry (Alt 1). Additionally, the receiving RLC entity should share such in-activity timer with the corresponding transmitting RLC entity and use it as the reference to prevent the occurrence of the UMD PDU discarding.
- Proposal 4: transmitting RLC entity should be released after the in-activity timer expiry to prevent the occurrence of the UMD PDU discarding.
- Proposal 5: The receiving RLC entity should share the in-activity timer with the corresponding transmitting RLC entity and use it as the reference to prevent the occurrence of the UMD PDU discarding.

### (3) Conclusion

The potential mismatches of the transmitting and receiving PDCP/RLC entities are addressed. The benefit of specifying an inactivity timer used by both the transmitting and receiving RLC entities to prevent unnecessary UMD PDU discarding is discussed. We have the following proposals.

### [Additional Statement 2]

A supplementary matter of the embodiment is provided below.

### (1) Set PDCP/RLC parameter

### (1.1) Problem

In cellular communication, PDCP and RLC entities used in a data bearer are produced (established) when the UE 100 receives an RRC signaling transmitted from a cell. The PDCP parameter and the RLC parameter used when the PDCP and RLC entities are produced are set by the RRC signaling.

On the other hand, in D2D communication, a method for setting the PDCP parameter and the RLC parameter is not yet defined. As described in the [Appendant 1] above, between a receiving UE 100 (receiving D2D UE) and a transmitting UE 100 (transmitting D2D UE), it is necessary to use an identical parameter value.

Therefore, an object is to provide a technique for setting a PDCP parameter and an RLC parameter used for D2D communication, below. It is noted that in order to set one of the parameters, that is, the PDCP parameter and the RLC parameter, it may be naturally possible to use the following method. The other of the parameters may be set by using a method different from that used for the one of the parameters.

### (1.2) Solution

In a first method, RLC and PDCP setting for a D2D bearer is defined for each SA (reception) resource pool.

The RLC and PDCP setting for a D2D bearer may be previously stored by the UE 100 (D2D UE) (Pre-configured). The RLC and PDCP setting for a D2D bearer may be notified, by broadcast, from the eNB200 to the UE 100.

The transmitting UE 100 uses a setting corresponding to the SA resource pool used for transmitting the SA (RLC and PDCP setting for a D2D bearer) so as to establish the RLC and PDCP entities.

The receiving UE 100 uses a setting corresponding to the SA resource pool used for reception of the SA transmitted from the transmitting UE 100 so as to establish the RLC and PDCP entities.

In the partial coverage, a UE 100 in a coverage and a UE 100 out of a coverage need to utilize the identical PDCP parameter and RLC parameter. For this reason, the SA resource pool used in the coverage and the SA resource pool used out of the coverage match at least partially. (At least in the matching portion) the PDCP parameter and the RLC parameter (that is, the RLC and PDCP setting for a D2D bearer) are identical.

The serving cell may notify the UE 100 (D2D UE) located at a cell edge to perform transmission in the SA resource pool (the matching portion of the SA resource pool).

In a second method, the transmitting UE 100 includes the PDCP and RLC setting into a MAC sub-header of the data, and transmits the resultant data. The receiving UE 100 uses the setting included in the received data (MAC PDU) so as to establish the PDCP and RLC entities.

In a third method, the transmitting UE includes the PDCP and RLC setting into the SA, and transmits the resultant SA. The receiving UE 100 uses the setting included in the received SA so as to establish the PDCP and RLC entities.

### (2) Set PDCP parameter

### (2.1) [Problem]

If encryption (ciphering) and header compression (RoHC, Header compression/de-compression) in a PDCP entity used in cellular communication are utilized in D2D communication, then the parameters in the PDCP entity between the transmitting UE 100 and the receiving UE 100 do not match, and as a result, the receiving UE 100 may fail to decrypt and/ or decompress the PDCP PDC and discard the PDCP PDU. A reason for this is that the parameter (HFN (Hyper Frame Number), CID (Context Identifier)) are employed on the assumption that the timings of generating a transmitting PDCP entity and a receiving PDCP entity are identical.

### (2.2) Solution

In the first method, the receiving UE 100 uses a fixed value (that is, unchanged) value as a parameter to as to perform at least one of the data decryption and the data decompression.

For example, a value fixed as an HFN (for example, 0) is used. Accordingly, when the transmitting UE 100 has already performed the D2D communication, even if the receiving UE 100 participates (starts reception) in the D2D communication at some midpoint, deviation in the HFN does not occur. Accordingly, in the processing of the PDCP PDU, the receiving UE 100 is capable of restraining discarding of the PDU caused due to the deviation in the HFN.

It is noted that the transmitting UE 100 is capable of fixing a parameter used in at least one processing of the data encryption and the data compression.

In the second method, in the D2D communication, RoHC using the CID is not implemented. If the transmitting UE 100 omits the unchanged header but applies the CID to the data instead thereof so as to transmit the data (PDCP PDUs), then the receiving UE 100 that participated in the D2D communication (started reception) at some midpoint is not capable of knowing the CID. Therefore, as a result of not performing the RoHC using the CID by (that is, the unchanged header is not omitted), the receiving UE 100, which participated in the D2D communication at some midpoint, is capable of decompressing the data.

Therefore, in the second method, when header information indicating a data follow is not changed in the transmitting PDCP entity, under the assumption that a compression process is performed in which the CID to designate the data flow, instead of the header information, is applied to the data, if the transmitting PDCP entity is an entity used for the D2D communication, then the transmitting UE 100 cancels (does not execute) the compression process.

It is noted that the transmitting UE 100 may designate the data flow instead of the header information and execute a compression process of applying, to the date, a predetermined identifier associated with the SA resource pool used for the D2D communication.

In the third method, in order to implement the first method described above, a parameter (e.g., maxCID) having a smaller bit number than the cellular communication is used for D2D communication.

It is noted that the entire content of Japanese Patent Application No. 2014-152429 (filed on July 25, 2014) and US Provisional Application No. 62/035088 (filed on August 8, 2014) is incorporated in the specification of the present application by reference.

### INDUSTRIAL APPLICABILITY

As described above, the user terminal and the mobile communication system according to the embodiment, with which it is possible to appropriately control D2D communication, are useful in the mobile communication field.

## Claims

1. A user terminal, comprising:
a controller configured to perform control to discard data of a predetermined sequence number, under a predetermined condition based on a window size used in a receiving RLC entity to define a sequence number of data capable of being received without advancing a window, in the receiving RLC entity established to receive data by D2D communication that is direct device-to-device communication, wherein
the controller sets the window size to zero.

2. The user terminal according to claim 1, wherein the controller sets, in accordance with a type of information transmitted by the D2D communication, the window size to zero.

3. The user terminal according to claim 1, wherein the controller sets, in accordance with a destination of data transmitted by the D2D communication, the window size to zero.

4. The user terminal according to claim 1, wherein the controller sets, in accordance with a transmission method in the D2D communication, the window size to zero.

5. A user terminal, comprising:
a controller configured to establish a receiving RLC entity for receiving data by D2D communication that is direct device-to-device communication, wherein
the controller performs, in accordance with a type of information transmitted by the D2D communication, a setting related to a window in the receiving RLC entity.

6. A user terminal comprising:
a receiver configured to receive information related to release of a transmitting RLC entity from another user terminal that has established the transmitting RLC entity for transmitting data to the user terminal through D2D communication that is direct device-to-device communication.

7. The user terminal according to claim 6, further comprising a controller configured to release a receiving RLC entity for receiving data from the another user terminal through the D2D communication, based on the information received by the receiver.

8. The user terminal according to claim 7,
wherein the controller releases the receiving RLC entity on a basis of the information, at least before a period of time in which the another user terminal releases the transmitting RLC entity is exceeded.

9. The user terminal according to claim 8,
wherein the information is information of a timer used for the another user terminal to release the transmitting RLC entity.

10. The user terminal according to claim 6,
wherein a plurality of periods of time for repetitive transmission of data are set in a time direction, and
the user terminal further comprising a controller configured to release the receiving RLC entity when no data is received from the another user terminal although after data is received from the another user terminal within a first period of time serving as the period of time, a second period of time serving as the period of time subsequent to the first period of time is exceeded.

11. A user terminal comprising:
a controller configured to establish a transmitting RLC entity for transmitting data to another user terminal through D2D communication that is direct device-to-device communication; and
a transmitter configured to transmit information related to release of the transmitting RLC entity to the another user terminal.

12. The user terminal according to claim 11,
wherein the information is information of a timer used for the user terminal to release the transmitting RLC entity.

13. The user terminal according to claim 11,
wherein a plurality of periods of time for repetitive transmission of data are set in a time direction, and
the controller randomly sets a timing at which the same data is transmitted when control of repeatedly transmitting the same data within the period of time is performed.

14. A user terminal comprising:
a controller configured to establish a receiving RLC entity for receiving data from another user terminal through D2D communication that is direct device-to-device communication; and
a receiver configured to receive information indicating at least one of a start and an end of transmission of data transmitted from the another user terminal through the D2D communication,
wherein the controller releases the receiving RLC entity based on the information.

15. The user terminal according to claim 14,
wherein the information is flag information identifying an interval from a start to an end of one block of the data transmitted from the another user terminal.

16. The user terminal according to claim 14,
wherein a plurality of periods of time for repetitive transmission of data are set in a time direction, and
the controller releases the receiving RLC entity when no data is received from the another user terminal although after data is received from the another user terminal within a first period of time serving as the period of time, a second period of time serving as the period of time subsequent to the first period of time is exceeded.

17. A user terminal comprising:
a controller configured to establish a transmitting RLC entity for transmitting data to another user terminal through the D2D communication that is direct device-to-device communication; and
a transmitter configured to transmit information indicating at least one of a start and an end of transmission of data transmitted from the another user terminal through the D2D communication.

18. The user terminal according to claim 17,
wherein the information is flag information identifying an interval from a start to an end of one block of the data.

19. A mobile communication system that supports D2D communication being direct device-to-device communication, comprising:
a first user terminal configured to transmit a scheduling allocation indicating a position of time and frequency resources for receiving data in the D2D communication, using time and frequency resources within an SA resource pool; and
a second user terminal configured to receive the scheduling allocation from the first user terminal using the time and frequency resources within the SA resource pool, wherein
the first user terminal establishes a transmitting RLC entity used in the D2D communication based on setting information associated with the SA resource pool, and
the second user terminal establishes a receiving RLC entity used in the D2D communication based on the setting information associated with the SA resource pool.

20. A mobile communication system that supports D2D communication being direct device-to-device communication, comprising:
a first user terminal configured to establish a transmitting RLC entity for transmitting data through the D2D communication; and
a second user terminal configured to establish a receiving RLC entity for receiving data through the D2D communication, wherein
the first user terminal transmits data including setting information of a receiving RLC entity, and
the second user terminal establishes the receiving RLC entity based on the setting information of the receiving RLC entity.

21. A mobile communication system that supports D2D communication being direct device-to-device communication, comprising:
a first user terminal configured to transmit a scheduling allocation indicating a position of time and frequency resources for receiving data in the D2D communication; and
a second user terminal configured to receive the scheduling allocation from the first user terminal,
wherein the first user terminal transmits the scheduling allocation including setting information of a receiving RLC entity for receiving data in the D2D communication, and
the second user terminal establishes the receiving RLC entity based on the setting information of the receiving RLC entity.

22. A user terminal, comprising:
a controller configured to perform data deciphering and data de-compression based on an unchanged parameter in a PDCP entity used in D2D communication that is direct device-to-device communication.

23. The user terminal according to claim 22, wherein the unchanged parameter is a maximum value of a context identifier.
